# EUROPÄISCHE PATENTSCHRIFT

(11) **EP 3 736 172 B1**
(45) Veröffentlichungstag und Bekanntmachung des Hinweises auf die Patenterteilung: **03.11.2021**
(21) Anmeldenummer: 20173530.5
(22) Anmeldetag: 07.05.2020
(51) Int. Cl.: B60R 5/04, B60R 13/02, B60R 21/06, F16B 2/24

(54) **FAHRZEUG MIT EINER MONTAGEANORDNUNG ZUM EINHÄNGEN EINES BAUTEILS**
VEHICLE WITH A MOUNTING ARRANGEMENT FOR SUSPENDING A COMPONENT
VÉHICULE DOTÉ D'UN AGENCEMENT DE MONTAGE PERMETTANT DE SUSPENDRE UN COMPOSANT

(30) Priorität: 10.05.2019 DE 102019112227
(43) Veröffentlichungstag der Anmeldung: 11.11.2020
(73) Patentinhaber: VOLKSWAGEN AG, 38440 Wolfsburg (DE)
(72) Erfinder: Grobe, Michaela, 38557 Osloß (DE); Kapune, Steffen, 30161 Hannover (DE)
(74) Vertreter: Bierschneider, Walter

(56) Entgegenhaltungen:
- WO-A1-2016/131567

## Beschreibung

Die Erfindung betrifft ein Fahrzeug mit einer Montageanordnung zum Einhängen eines Bauteils, insbesondere einer Netztrennwand-Stange, in eine Einhängeöse nach dem Oberbegriff des Patentanspruches 1.

An den Dachrahmen-Seitenteilen der Karosserie- oder Rohbaustruktur eines zweispurigen Kraftfahrzeugs können unterschiedliche Anbauteile rohbaufest angebunden sein, etwa Halterungen für einen Kopfairbag oder Einhängebautele zum Einhängen einer Netztrennwand-Stange.

Aus der WO 2016/131567 A1 ist ein Fahrzeug nach dem Oberbegriff von Anspruch 1 bekannt, das eine
Montageanordnung zum Einhängen einer Netztrennwand-Stange in einer Einhängeöse aufweist, die an einem karosserieseitigen, bzw. rohbaufesten Einhängeösen-Trägerteil ausgebildet ist. Im Zusammenbaustand ist das Einhängeösen-Trägerteil sichtgeschützt von einem Dachhimmel überdeckt. Die Montageanordnung weist eine Blende auf, die an einer ersten Anbindungsstelle an einem Öffnungsrandbereich einer Dachhimmel-Montageöffnung angebunden ist. Beim Blenden-Einbau wird die Blende in einem ersten Prozessschritt in einer Fügerichtung von fahrzeuginnen durch die Dachhimmel-Montageöffnung geführt, bis ein flächiger Blenden-Basisabschnitt in Anlage mit dem Öffnungsrandbereich der Dachhimmel-Montageöffnung kommt und ein Blenden-Montagekörper durch die Dachhimmel-Montageöffnung ragt. Anschließend wird in einem zweiten Prozessschritt die Blende mittels ihres Blenden-Montagekörpers am Dachhimmel, insbesondere in schwimmender Lagerung, am Dachhimmel befestigt, und zwar unter Bildung der oben genannten ersten Anbindungsstelle. In einem folgenden Prozessschritt wird die am Dachhimmel befestigte Blende an einer zweiten Anbindungsstelle fest am karosserieseitigen Einhängeösen-Trägerteil (zum Beispiel durch eine Schraubverbindung) angebunden.

Im obigen Stand der Technik ist hinter dem Dachhimmel sichtgeschützt ein Kopfairbag rohbaufest an das Dachrahmen-Seitenteil verbaut. Bei einer Airbag-Aktivierung entfaltet sich der Kopfairbag und drückt den Dachhimmel nach fahrzeuginnen, so dass sich der Airbag unter Verformung des Dachhimmels in der Fahrzeughochrichtung nach unten in Richtung Fahrzeuginnenraum entfaltet. Die beim Airbagschuss auf den Dachhimmel ausgeübten Kräfte können unter ungünstigen Umständen dazu führen, dass sich der Dachhimmel von der rohbaufest befestigten Netztrennwand-Blende löst und der Dachhimmel ohne Netztrennwand-Blende in Richtung Fahrzeuginnenraum verlagert wird. In diesem Fall kann gegebenenfalls die rohbaufeste Netztrennwand-Blende eine Störkontur für den sich entfaltenden Kopfairbag darstellen.

Aus der DE 10 2016 214 203 A1 ist eine Fahrzeugkarosserie mit einer Montageanordnung zum Einhängen eines Bauteils bekannt. Aus der DE 10 2010 017 556 A1 ist ein Verfahren zum Montieren eines Dachhimmelmoduls an einer Karosserie eines Kraftfahrzeugs bekannt. Aus der DE 10 2007 033 743 A1 ist eine Airbagabdeckung insbesondere für einen Kopfairbag in einem Kraftfahrzeug bekannt.

Die Aufgabe der Erfindung besteht darin, ein Fahrzeug mit einer, in einer Großserienfertigung anwendbaren Montageanordnung zum Einhängen eines Bauteils in einer Einhängeöse bereitzustellen, bei der die Anbindung der Blende am Dachhimmel und/oder an dem Fahrzeug-Rohbau in einfacher Weise erfolgt

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 zielt die Erfindung auf die eine einfache Realisierung der ersten Anbindungsstelle ab, an der die Blende am Dachhimmel befestigt ist. Demnach ist der ersten Anbindungsstelle ein als separates Bauteil gebildeter Befestigungsclip zugeordnet. Dieser kann bei einer Blenden-Montage in einer Steckrichtung auf eine korrespondierende Führungskontur des Blenden-Montagekörpers bis in eine Verriegelungsstelle aufgeschoben werden. In der Verriegelungsstellung untergreift der Befestigungsclip den Öffnungsrandbereich der Dachhimmel-Montageöffnung.

Der Befestigungsclip kann sichtgeschützt auf der, vom Fahrzeuginnenraum abgewandten Dachhimmel-Seite positioniert sein. In der Verriegelungsstellung kann der Öffnungsrandbereich der Dachhimmel-Montageöffnung zwischen dem Befestigungsclip und dem Blenden-Basisabschnitt geklemmt sein. Im Hinblick auf eine einwandfreie Verriegelungswirkung ist es bevorzugt, wenn die Steckrichtung des Befestigungsclips rechtwinklig zur Blenden-Fügerichtung ausgerichtet ist.

In einer technischen Umsetzung kann die am Blenden-Montagekörper ausgebildete Führungskontur als eine Linearführung realisiert sein, auf die der Befestigungsclip in einer Linear-Steckbewegung aufschiebbar ist. Die Blende kann in ihrem Blenden-Basisabschnitt eine Blendenöffnung aufweisen. Diese kann im Zusammenbauzustand in der Blenden-Fügerichtung in Flucht mit der trägerseitigen Einhängeöse ausgebildet sein. In einer technischen Realisierung können beidseitiger dieser Blendenöffnung jeweils eine Linearführung ausgebildet sein. Die Linearführung kann konstruktiv einfach als eine seitlich nach außen offene Führungsnut realisiert sein. Deren Nutboden und deren Nutseitenwand können materialeinheitliche Bestandteile eines am Blenden-Montagekörper ausgebildeten Führungsstegs sein. Demgegenüber kann die zweite Nutwand unmittelbar durch die Blenden-Rückseite ausgebildet sein.

Der Befestigungsclip kann in einer technischen Realisierung als eine U-förmige Befestigungsspange realisiert sein, die bevorzugt als ein Kunststoffspritzgießteil hergestellt ist. Die U-förmige Befestigungsspange kann zwei zueinander parallele Spangenarme aufweisen. Diese können über eine Verbindungsstrebe miteinander verbunden sein. Die Verbindungsstrebe der U-förmigen Befestigungsspange kann als ein Bewegungsanschlag wirken. Dieser kann in der Verriegelungsposition in Anlage mit einer blendenseitigen Anschlagkontur sein. Beispielhaft kann die blendenseitige Anschlagkontur unmittelbar eine, der Verbindungsstrebe zugewandte Führungsnut-Stirnseite sein.

Bevorzugt ist es, wenn die Blende nicht nur über die erste Anbindungsstelle am Dachhimmel befestigt ist, sondern vielmehr über eine zweite Anbindungsstelle auch am Fahrzeug-Rohbau angebunden ist. In einer fertigungstechnisch einfachen Weiterbildung kann die zweite Anbindungsstelle als eine lösbare Rastverbindung realisiert sein. In diesem Fall kann der Blenden-Montagekörper oder der Befestigungsclip zumindest ein elastisch nachgiebiges Rastelement aufweisen, das im Zusammenbauzustand in Rastverbindung mit dem karosserieseitigen Trägerteil gebracht ist. Das karosserieseitige Trägerteil kann beispielhaft ein starres Blech-Winkelprofilteil sein, das über Schraubverbindungen am Dachrahmen-Seitenteil der Fahrzeugkarosserie montiert ist.

In einer ersten Ausführungsvariante kann das obige Rastelement mit seinem Elementfuß unmittelbar außenseitig an der Nutseitenwand des Blenden-Führungsstegs angeformt sein. Auf diese Weise können die ersten und zweiten Anbindungsstellen bauraumreduziert unmittelbar an der Blende realisiert werden. Das Rastelement kann bevorzugt rechtwinklig von der Nutseitenwand des Führungsstegs abragen.

Alternativ dazu kann das Rastelement nicht unmittelbar an der Blende angeformt sein, sondern vielmehr materialeinheitlich und/oder einstückig am Befestigungsclip ausgebildet sein. Dabei kann das Rastelement in der Befestigungsclip-Verriegelungsposition rechtwinklig zum flächigen Blenden-Basisabschnitt ausgerichtet sein. Im Falle einer U-förmigen Befestigungsspange ist es im Hinblick auf eine ausreichend große Verbindungsfestigkeit von Vorteil, wenn an jedem Spangenarm der Befestigungsspange jeweils ein Rastelement ausgebildet ist. Die beiden Rastelemente können jeweils bevorzugt seitlich außerhalb der Führungsnuten positioniert sein.

Im Hinblick auf eine im Crashfall störkonturfreie Entfaltung des Kopfairbags ist es bevorzugt, wenn die erste Anbindungsstelle (zwischen der Blende und dem Dachhimmel) eine größere Verbindungsfestigkeit aufweist als die der zweiten Anbindungsstelle (zwischen der Blende und dem rohbauseitigen Einhängeösen-Trägerteil). In diesem Fall kann bei einer zur Fügerichtung gegenläufigen Kraftbeaufschlagung (aufgrund der Kopfairbag-Entfaltung) auf die Blende sich zuerst die zweite Anbindungsstelle lösen. Von daher ist gewährleistet, dass die Blende im Crashfall keine Störkontur für den sich entfaltenden Kopfairbag bildet.

Nachfolgend sind Ausführungsbeispiele der Erfindung anhand der beigefügten Figuren beschrieben.

Es zeigen:
- Figur 1: in einer Seitenansicht ein zweispuriges Kraftfahrzeug mit teilweisem Aufriss, der eine Netztrennwand in ihrer Gebrauchslage freilegt;
- Figur 2: eine Schnittdarstellung entlang einer Schnittebene yz aus der Figur 1;
- Figur 3: eine weitere Schnittdarstellung entlang der Schnittebene xz;
- Figuren 4 bis 7: jeweils Ansichten, die eine Füge-Abfolge zur Montage der Netztrennwand-Blende am Dachhimmel und am Fahrzeug-Rohbau veranschaulichen; und
- Figuren 8 bis 10: verschiedene Perspektivansichten einer Montageanordnung gemäß einem zweiten Ausführungsbeispiel.

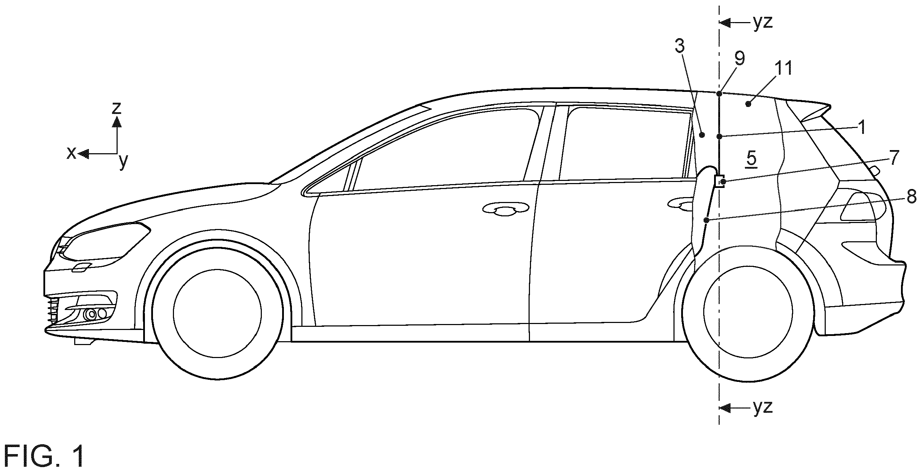

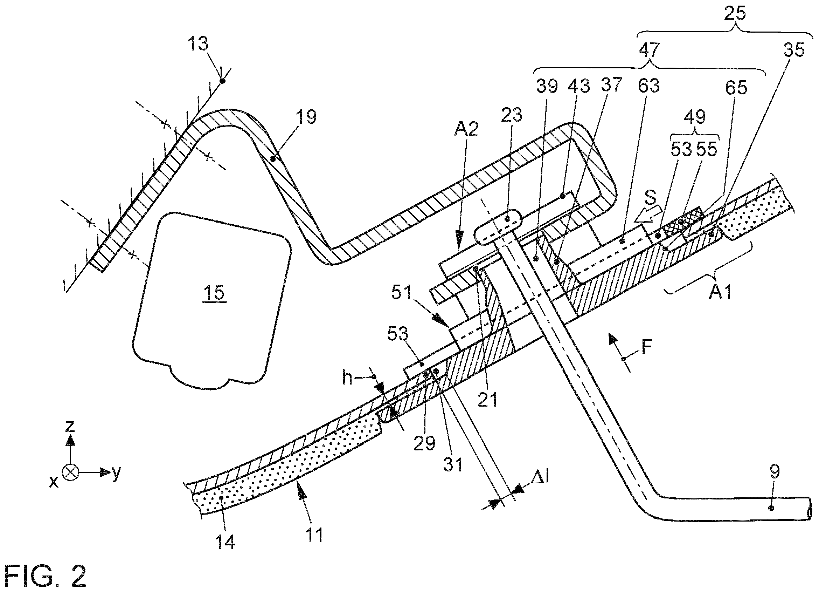

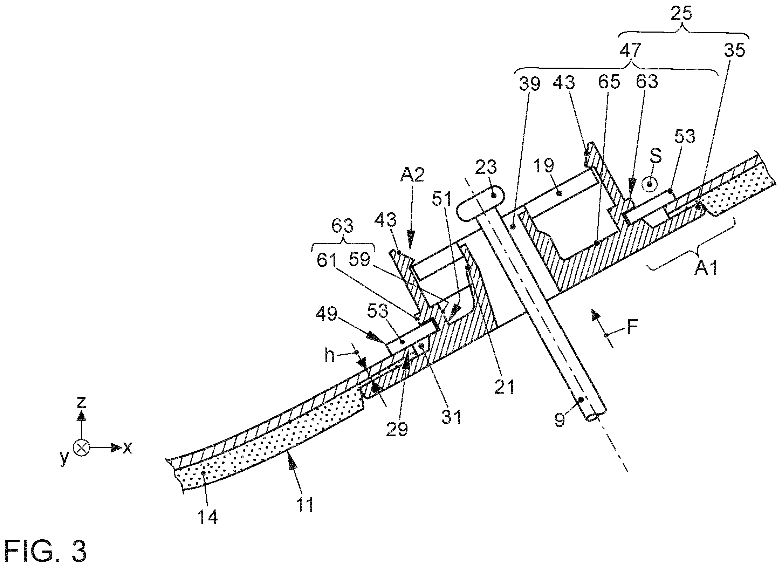

In der Figur 1 ist ein Fahrzeug in Seitenansicht gezeigt, das heckseitig eine Netztrennwand 1 aufweist, die in der dargestellten Gebrauchslage im Fahrzeuginnenraum einen Insassenraum 3 von einem heckseitigen Laderaum 5 trennt. Die Netztrennwand 1 weist in der Figur 1 eine Aufwickelkassette 7 auf, die rückseitig an einer Rückenlehne 8 einer Rücksitzbank des Fahrzeugs positioniert ist. In der Figur 1 ist die Netztrennwand 1 entgegen einer Federkraft aus der Aufwickelkassette 7 herausgezogen und mit ihrer Netztrennwand-Stange 9 in am Dachhimmel 11 angeordnete Einhängeöffnungen eingehängt, die mit Bezug auf eine Fahrzeuglängsmittellängsachse beidseitig spiegelbildlich am Dachhimmel 11 angeordnet sind und deren Einhängegeometrie nachfolgend anhand der Figuren 2 und 3 beschrieben ist.

So weist in der Schnittdarstellung der Figur 2 die Fahrzeugkarosserie ein angedeutetes Dachrahmen-Seitenteil 13 auf, das Bestandteil eines Karosserie-Dachrahmens ist. An der Fahrzeuginnenseite des Dachrahmen-Seitenteils 13 sind nicht dargestellte Halterungen für einen Kopfairbag 15 sowie für ein Einhängeösen-Trägerteil 19 montiert, das an seinem fahrzeuginneren U-Schenkel eine Einhängeöse 21 aufweist, in der ein ausgeweiteter Stangenkopf 23 der Netztrennwand-Stange 9 einhängbar ist. Das Einhängeösen-Trägerteil 19 mit der Einhängegeometrie ist von dem Dachhimmel 11 sichtgeschützt überdeckt sowie mit einem lichten Abstand vom Dachhimmel 11 beabstandet. Die in der Figur 2 gezeigte Montageanordnung weist zudem eine Netztrennwand-Blende 25 auf, die an einer ersten Anbindungsstelle A1 an einem Öffnungsrandbereich 29 einer Dachhimmel-Montageöffnung 31 angebunden ist.

Die in der Figur 2 gezeigte Netztrennwand-Blende 25 ist aus einem bauteilsteifen HartKunststoff gefertigt und weist einen, dem Fahrzeuginnenraum zugewandten flächigen Basisabschnitt 35 sowie einen davon abragenden Montagekörper 47 auf, der durch die Dachhimmel-Montageöffnung 31 geführt ist. Zudem geht der flächige Blenden-Basisabschnitt 35 innen in einen hohlzylindrischen Einführtrichter 37 über. Dieser begrenzt eine Blendenöffnung 39, durch die die Netztrennwand-Stange 9 geführt ist. In der Figur 2 ragt der Einführtrichter 37 in die Einhängeöse 21 des Metall-Trägerteils 19 lose ein. Die Blendenöffnung 39 der Netztrennwand-Blende 25 ist in den Figuren 1 und 2, in der Fügerichtung F betrachtet, in Flucht mit der trägerseitigen Einhängeöse 21 ausgerichtet.

Die Netztrennwand-Blende 25 ist in der Figur 2 oder 3 an einer zweiten Anbindungsstelle A2 am Metall-Trägerteil 19 angebunden. Die zweite Anbindungsstelle A2 ist als eine Rastverbindung realisiert, bei der zwei Rastelemente 43 das Metall-Trägerteil 19 außenseitig umgreifen, wie es in der Figur 3 gezeigt ist.

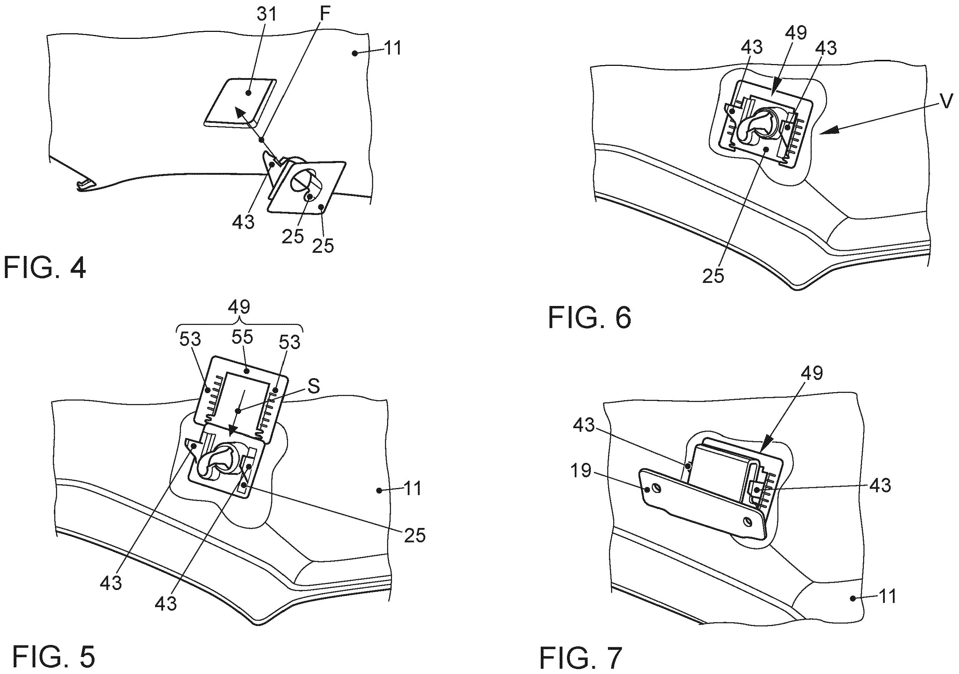

In den Figuren 1 und 2 ist die erste Anbindungsstelle A1 mit Hilfe eines Befestigungsclips 49 realisiert. Dieser ist in einer Steckrichtung S auf eine Führungskontur 51 des Blenden-Montagekörpers 47 bis in eine Verriegelungsstellung V (Figur 6) aufgeschoben. Der Befestigungsclip 49 ist in den dargestellten Ausführungsvarianten eine U-förmige Befestigungsspange, die zwei zueinander parallele Spangenarme 53 aufweist, die über eine Verbindungsstrebe 55 miteinander verbunden sind. Die am Blenden-Montagekörper 47 ausgebildete Führungskontur 51 ist mittels seitlicher Führungsnuten realisiert, in die die Spangenarme 53 der Befestigungsspange eingeschoben sind.

Wie aus der Figur 3 hervorgeht, sind die beiden Spangenarmen 53 des Befestigungsclips 49 jeweils eine Führungsnut zugeordnet. In der Verriegelungsstellung V des Befestigungsclips 49 untergreift der Befestigungsclip 49 den Öffnungsrandbereich 29 der Dachhimmel-Montageöffnung 31, so dass der Öffnungsrandbereich 29 der Dachhimmel-Montageöffnung 31 zwischen dem Befestigungsclip 49 und dem Blenden-Basisabschnitt 35 zwischengeklemmt ist. Die Führungsnut 51 weist in der Figur 3 einen Nutboden 59 und eine erste Nutseitenwand 61 auf, die materialeinheitliche Bestandteile eines am Blenden-Montagekörper 47 ausgebildeten Führungsstegs 63 sind. Die zweite Nutseitenwand der Führungsnut 51 ist in der Figur 3 unmittelbar durch die Rückseite der Blende 25 gebildet.

Gemäß der Figur 2 ist die Netztrennwand-Blende 25 über ein Lochspiel Δl schwimmend in der Dachhimmel-Montageöffnung 31 gelagert. Zur Begrenzung der schwimmenden Lagerung weist der Blenden-Montagekörper 47 einen Anschlagsockel 65 auf, der ausgehend von der Rückseite des flächigen Blenden-Basisabschnittes 35 in die Dachhimmel-Montageöffnung 31 einragt. Bei einer Toleranzausgleich-Bewegung kann die Netztrennwand-Blende 25 mit ihrem Anschlagsockel 65 unter Aufbrauch des Lochspiels Δl bis in Anlage mit dem Öffnungsrand der Dachhimmel-Montageöffnung geschoben werden.

Gemäß der Figur 2 und 3 sind die beiden Rastelemente 43 unmittelbar außenseitig an der ersten Nutseitenwand 61 des Führungsstegs 63 angeformt. Die Rastelemente 43 ragen rechtwinklig von der Nutseitenwand 61 des Führungsstegs 63 ab.

Nachfolgend wird anhand der Figuren 4 bis 7 eine Füge-Abfolge zur Montage der Netztrennwand-Blende 25 am Dachhimmel 11 und am karosserieseitigen Metall-Trägerteil 19 beschrieben: So wird zunächst in der Figur 4 die Blende 25 mit ihrem Montagekörper 47 in der Fügerichtung F durch die in etwa rechtwinklige Dachhimmel-Montageöffnung 31 geführt, und zwar bis der Blenden-Basisabschnitt 35 mit einer Fügekraft gegen den Dachhimmel 11 gedrückt ist. Der Dachhimmel 11 weist ein elastisch komprimierbares Schaummaterial 14 (Figuren 2 oder 3) auf. Mit der Fügebewegung erfolgt eine Reduzierung der Dachhimmel-Materialstärke sowie ein gleichzeitiger Aufbau einer Rückstellkraft. Im folgenden Prozessschritt wird der Befestigungsclip 49 in der Steckrichtung S auf die Führungskontur 51 der Netztrennwand-Blende 25 aufgeschoben (Figur 5), und zwar bis Erreichen der Verriegelungsposition V (Figur 6). Ein lichter Abstand h (Figuren 2 oder 3) zwischen der Unterseite des Blenden-Basisabschnitts 35 und dem Befestigungsclip 49 ist kleiner bemessen als die Dachhimmel-Materialstärke bei unverformtem Dachhimmel 11. Dadurch ist gewährleistet, dass der Öffnungsrandbereich der Dachhimmel-Montageöffnung 31 mit zumindest einer geringfügigen Klemmkraft zwischen dem Befestigungsclip 49 und dem Blenden-Basisabschnitt 35 zwischengeklemmt ist.

Im folgenden Prozessschritt wird die in der Figur 6 gezeigte Vormontageeinheit, bestehend aus dem Dachhimmel 11 und der daran fixierter Netztrennwand-Blende 25 am karosserieseitigen Metall-Trägerteil 19 verrastet (Figur 7).

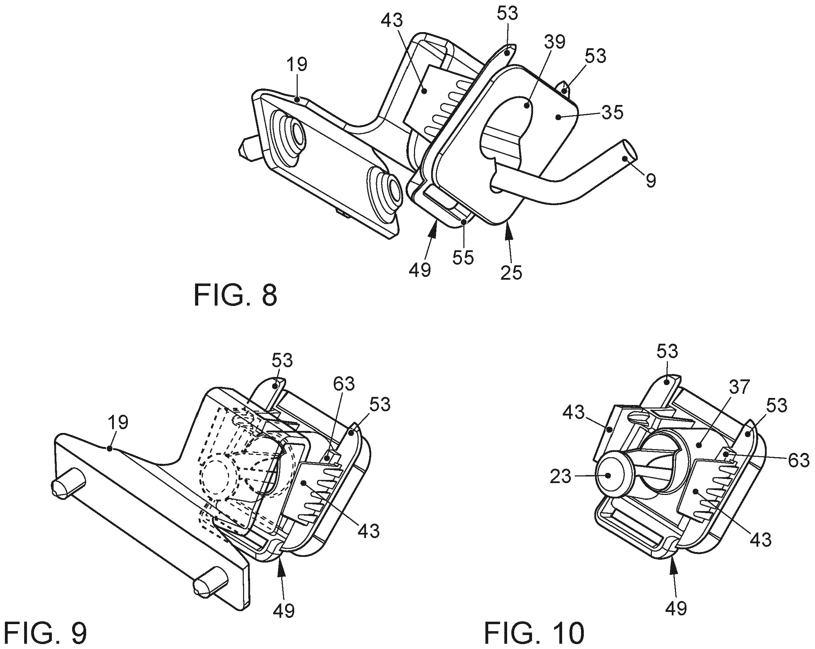

In den Figuren 8 bis 10 ist eine Montageanordnung gemäß einem zweiten Ausführungsbeispiel gezeigt. Im Hinblick auf ein einfacheres Verständnis der Montageanordnung sind in den Figuren 8 bis 10 der Dachhimmel 11 sowie das Dachrahmen-Seitenteil 13 weggelassen. Im Unterschied zum vorangegangenen Ausführungsbeispiel sind in den Figuren 8 bis 10 die beiden Rastelemente 43 nicht mehr unmittelbar an der Netztrennwand-Blende 25 angeformt, sondern vielmehr unabhängig davon an den Spangenarmen 53 des Befestigungsclips 49 angeformt. Im Zusammenbauzustand, das heißt in der Verriegelungsposition V, sind die beiden Rastelemente 43 seitlich außerhalb der Führungsnuten 51 positioniert.

### Bezugszeichenliste

- 1: Netztrennwand
- 3: Insassenraum
- 5: Laderaum
- 7: Aufwickelkassette
- 8: Rückenlehne
- 9: Netztrennwand-Stange
- 11: Dachhimmel
- 14: elastisch komprimierbares Material
- 15: Kopfairbag
- 19: karosserieseitiges Trägerteil
- 21: Einhängeöse
- 23: Stangenkopf
- 25: Blende
- 29: Öffnungsrandbereich
- 31: Dachhimmel-Montageöffnung
- 35: Blenden-Basisabschnitt
- 37: Einführtrichter
- 39: Blendenöffnung
- 41: Öffnungsrandbereich
- 43: Rastelement
- 47: Montagekörper
- 49: Befestigungsclip
- 51: Führungskontur
- 53: Spangenarme
- 55: Verbindungsstrebe
- 59: Nutboden
- 61: erste Nutseitenwand
- 63: Führungssteg
- 65: Anschlagsockel
- V: Verriegelungsposition
- S: Steckrichtung
- F: Fügerichtung
- Δl: Lochspiel
- h: lichte Höhe
- A1, A2: Anbindungsstellen

## Patentansprüche

1. Fahrzeug mit einer Montageanordnung zum Einhängen eines Bauteils, insbesondere einer Netztrennwand-Stange (9), in einer Einhängeöse (21), die an einem karosserieseitigen Einhängeösen-Trägerteil (19) ausgebildet ist, das ausgehend von fahrzeuginnen von einem Dachhimmel (11) sichtgeschützt überdeckt ist, und mit einer Blende (25), die an einer ersten Anbindungsstelle (A1) an einem Öffnungsrandbereich (29) einer Dachhimmel-Montageöffnung (31) angebunden ist, wobei beim Blenden-Einbau die Blende (25) in einer Fügerichtung (F) von fahrzeuginnen durch die Dachhimmel-Montageöffnung (31) führbar ist, bis ein flächiger Blenden-Basisabschnitt (35) in Anlage mit dem Öffnungsrandbereich (29) der Dachhimmel-Montageöffnung (31) kommt und ein Blenden-Montagekörper (47) durch die Dachhimmel-Montageöffnung (31) ragt, und wobei die Blende (25) mittels ihres Blenden-Montagekörpers (47) unter Bildung der ersten Anbindungsstelle (A) am Dachhimmel (11) befestigt ist, **dadurch gekennzeichnet, dass** der ersten Anbindungsstelle (A1) ein als separates Bauteil gebildeter Befestigungsclip (49) zugeordnet ist, der in einer Steckrichtung (S) auf eine Führungskontur (51) des Blenden-Montagekörpers (47) bis in eine Verriegelungsstellung (V) aufschiebbar ist, in der der Befestigungsclip (49) den Öffnungsrandbereich (29) der Dachhimmel-Montageöffnung (31) untergreift.

2. Fahrzeug nach Anspruch 1, **dadurch gekennzeichnet, dass** in der Verriegelungsstellung (V) der Öffnungsrandbereich (29) der Dachhimmel-Montageöffnung (31) zwischen dem Befestigungsclip (49) und dem Blenden-Basisabschnitt (35) geklemmt ist, und/oder dass die Steckrichtung (S) des Befestigungsclips (49) rechtwinklig zur Fügerichtung (F) der Blende (25) ausgerichtet ist, und/oder dass der Befestigungsclip (49) auf der vom Fahrzeuginnenraum abgewandten Seite des Dachhimmels (11) angeordnet ist.

3. Fahrzeug nach Anspruch 1 oder 2, **dadurch gekennzeichnet, dass** die Führungskontur (51) zumindest eine Linearführung ist, auf die der Befestigungsclip (49) in einer Linear-Steckbewegung (S) schiebbar ist, und dass insbesondere die Blende (25) eine Blendenöffnung (39) aufweist, die im Blenden-Basisabschnitt (35) ausgebildet ist und/oder im Wesentlichen in der Fügerichtung (F) in Flucht mit der trägerseitigen Einhängeöse (21) ausgebildet ist, und dass insbesondere beidseitig der Blendenöffnung (39) jeweils eine Führungskontur (51) ausgebildet ist.

4. Fahrzeug nach Anspruch 3, **dadurch gekennzeichnet, dass** der Befestigungsclip (49) eine U-förmige Befestigungsspange ist, die zwei zueinander parallele Spangenarme (53) aufweist, die über eine Verbindungsstrebe (55) miteinander verbunden sind.

5. Fahrzeug nach Anspruch 4, **dadurch gekennzeichnet, dass** die am Blenden-Montagekörper (47) ausgebildete Linearführung zumindest eine seitlich nach außen offene Führungsnut ist, deren Nutboden (59) und erste Nutseitenwand (61) materialeinheitliche Bestandteile eines am Blenden-Montagekörper (47) ausgebildeten Führungsstegs (63) sind, und/oder dass die zweite Nutseitenwand von der Rückseite der Blende (25) gebildet ist.

6. Fahrzeug nach Anspruch 5, **dadurch gekennzeichnet, dass** die Verbindungsstrebe (55) der U-förmigen Befestigungsspange als ein Bewegungsanschlag wirkt, der in der Verriegelungsposition (V) mit einer blendenseitigen Anschlagkontur in Anlage ist, insbesondere mit einer, der Verbindungsstrebe (55) zugewandten Führungsnut-Stirnseite.

7. Fahrzeug nach einem der vorhergehenden Ansprüche, **dadurch gekennzeichnet, dass** der Blenden-Montagekörper (57) oder der Befestigungsclip (49) zumindest ein elastisch nachgiebiges Rastelement (43) aufweist, das im Zusammenbauzustand in Rastverbindung mit dem karosserieseitigen Trägerteil (19) ist, und zwar unter Bildung einer zweiten Anbindungsstelle (A2), an der die Blende (25) am karosserieseitigen Trägerteil (19) angebunden ist.

8. Fahrzeug nach Anspruch 7, **dadurch gekennzeichnet, dass** das Rastelement (43) mit seinem Elementfuß unmittelbar außenseitig an der Nutseitenwand (61) des Führungsstegs (63) der Blende (25) ausgebildet ist, und/oder dass das Rastelement (43) rechtwinklig von der Nutseitenwand (61) des Führungsstegs (63) abragt.

9. Fahrzeug nach Anspruch 7, **dadurch gekennzeichnet, dass** das materialeinheitlich und/oder einstückig am Befestigungsclip (49) ausgebildete Rastelement (43) in der Verriegelungsposition (V) rechtwinklig zum flächigen Blenden-Basisabschnitt (35) ausgerichtet ist, und/oder dass an jedem Spangenarm (53) des als Befestigungsspange ausgebildeten Befestigungsclips (49) ein Rastelement (43) ausgebildet ist, und/oder dass in der Verriegelungsposition (V) das Rastelement (43) seitlich außerhalb der Führungsnut (51) angeordnet ist.

10. Fahrzeug nach einem der Ansprüche 7 bis 9, **dadurch gekennzeichnet, dass** die Verbindungsfestigkeit der ersten Anbindungsstelle (A1) größer ist als die Verbindungsfestigkeit der zweiten Anbindungsstelle (A2), so dass bei einer zur Fügerichtung (F) gegenläufigen Kraftbeaufschlagung auf die Blende (25) sich zuerst die zweiten Anbindungsstelle (A2) löst.

11. Fahrzeug nach einem der vorhergehenden Ansprüche, **dadurch gekennzeichnet, dass** im Hinblick auf einen Toleranzausgleich die Blende (25) in der Dachhimmel-Montageöffnung (31) schwimmend gelagert ist, und dass zur Realisierung der schwimmenden Lagerung der Blenden-Montagekörper (47) an der Rückseite des flächigen Blenden-Basisabschnittes (35) einen Anschlagsockel (65) aufweist, der mit Lochspiel (Δl) durch die Dachhimmel-Montageöffnung (31) ragt, und dass bei einer Toleranzausgleich-Bewegung der Blende (25) deren Anschlagsockel (65) unter Aufbrauch des Lochspiels (Δl) in Anlage mit dem Öffnungsrand der Dachhimmel-Montageöffnung (31) kommt.

## Claims

1. Vehicle with a mounting arrangement for suspending a component, in particular a net partition wall rod (9), in a suspension eyelet (21), which is formed on a suspension eyelet carrier part (19) on the body side and which, starting from the vehicle interior, is covered in a concealed manner by a roof liner (11), and with a faceplate (25), which is connected at a first connecting point (A1) to an opening edge region (29) of a roof liner mounting opening (31), wherein, when the faceplate is installed, the faceplate (25) can be guided from the vehicle interior through the roof liner mounting opening (31) in a joining direction (F), until a flat faceplate base section (35) comes into contact with the opening edge region (29) of the roof liner mounting opening (31) and a faceplate mounting body (47) projects through the roof liner mounting opening (31), and wherein the faceplate (25) is fastened to the roof liner (11) by means of its faceplate mounting body (47) to form the first connecting point (A), **characterized in that** the first connecting point (A1) is associated with a fastening clip (49) that is formed as a separate component, which can be pushed in a plug-in direction (S) onto a guide contour (51) of the faceplate mounting body (47) into a locked position (V), in which the fastening clip (49) engages beneath the opening edge region (29) of the roof liner mounting opening (31).

2. Vehicle according to claim 1, **characterized in that,** in the locked position (V), the opening edge region (29) of the roof liner mounting opening (31) is clamped between the fastening clip (49) and the faceplate base section (35), **and/or in that** the plug-in direction (S) of the fastening clip (49) is aligned perpendicularly to the joining direction (F) of the faceplate (25), **and/or in that** the fastening clip (49) is arranged on the side of the roof liner (11) facing away from the vehicle interior.

3. Vehicle according to claim 1 or 2, **characterized in that** the guide contour (51) is at least one linear guide onto which the fastening clip (49) can be pushed in a linear plug-in movement (S), **and in that,** in particular, the faceplate (25) has a faceplate opening (39), which is formed in the faceplate base section (35) and/or is formed substantially in alignment with the suspension eyelet (21) on the carrier side in the joining direction (F), **and in that** a guide contour (51) is formed in particular on each side of the faceplate opening (39).

4. Vehicle according to claim 3, **characterized in that** the fastening clip (49) is a U-shaped fastening brace, which has two brace arms (53) parallel to one another, which are connected to one another via a connecting strut (55).

5. Vehicle according to claim 4, **characterized in that** the linear guide formed on the faceplate mounting body (47) is at least one guide groove that is open laterally to the outside, whose groove bottom (59) and first groove side wall (61) are materially uniform components of a guide web (63) formed on the faceplate mounting body (47), **and/or in that** the second groove side wall is formed by the rear side of the faceplate (25).

6. Vehicle according to claim 5, **characterized in that** the connecting strut (55) of the U-shaped fastening brace acts as a travel stop, which, in the locked position (V), is in contact with a stop contour on the faceplate side, in particular with a guide groove end face facing the connecting strut (55).

7. Vehicle according to any one of the preceding claims, **characterized in that** the faceplate mounting body (57) or the fastening clip (49) has at least one elastically flexible latching element (43), which in the assembled state is in latching connection with the carrier part (19) on the body side, forming a second connecting point (A2) at which the faceplate (25) is connected to the carrier part (19) on the body side.

8. Vehicle according to claim 7, **characterized in that** the latching element (43) is formed with its element base directly on the outside of the groove side wall (61) of the guide web (63) of the faceplate (25), **and/or in that** the latching element (43) projects perpendicularly from the groove side wall (61) of the guide web (63).

9. Vehicle according to claim 7, **characterized in that,** in the locked position (V), the latching element (43) formed materially uniformly and/or in one piece on the fastening clip (49) is aligned perpendicularly to the flat faceplate base section (35), **and/or in that** a latching element (43) is formed on each brace arm (53) of the fastening clip (49) formed as a fastening brace, **and/or in that,** in the locked position (V), the latching element (43) is arranged laterally outside the guide groove (51).

10. Vehicle according to one of claims 7 to 9, **characterized in that** the connecting strength of the first connecting point (A1) is greater than the connecting strength of the second connecting point (A2), such that, when force is applied to the faceplate (25) in the opposite direction to the joining direction (F), the second connecting point (A2) comes loose first.

11. Vehicle according to any one of the preceding claims, **characterized in that,** with regard to tolerance compensation, the faceplate (25) is mounted in a floating manner in the roof liner mounting opening (31), **and in that,** in order to realize the floating mounting, the faceplate mounting body (47) has a stop base (65) on the rear side of the flat faceplate base section (35), which stop base projects through the roof liner mounting opening (31) with hole clearance (Δl), **and in that,** in the event of a tolerance-compensating movement of the faceplate (25), its stop base (65) comes into contact with the opening edge of the roof liner mounting opening (31), using up the hole clearance (Δl).

## Revendications

1. Véhicule doté d'un agencement de montage permettant de suspendre un composant, en particulier une tringle de filet de séparation (9), dans un œillet de suspension (21), lequel est formé sur une pièce porteuse d'œillet de suspension (19) côté carrosserie, laquelle est protégée des regards à partir de l'intérieur du véhicule par un pavillon (11) et d'un cache (25), lequel est attaché à un premier emplacement de raccordement (A1) sur une zone de bord d'ouverture (29) d'une ouverture de montage du pavillon (31), le cache (25) pouvant, lors de son installation, être guidé dans une direction d'assemblage (F) de l'intérieur du véhicule à travers l'ouverture de montage du pavillon (31), jusqu'à ce qu'une section de base plane de cache (35) vienne en appui avec la zone de bord d'ouverture (29) de l'ouverture de montage du pavillon (31) et qu'un corps de montage du cache (47) fasse saillie à travers l'ouverture de montage du pavillon (31) et le cache (25) étant fixé au moyen de son corps de montage du cache (47) au pavillon (11) en formant le premier emplacement de raccordement (A), **caractérisé en ce qu'**au premier emplacement de raccordement (A1) est associé un clip de fixation (49) formé comme un composant séparé, lequel peut être enfilé dans une direction d'enfichage (S) sur un contour de guidage (51) du corps de montage du cache (47) jusqu'à une position de verrouillage (V), dans laquelle le clip de fixation (49) saisit par dessous la zone de bord d'ouverture (29) de l'ouverture de montage du pavillon (31).

2. Véhicule selon la revendication 1, **caractérisé en ce que,** dans la position de verrouillage (V), la zone de bord d'ouverture (29) de l'ouverture de montage du pavillon (31) est serrée entre le clip de fixation (49) et la section de base du cache (35) **et/ou que** la direction d'enfichage (S) du clip de fixation (49) est orientée perpendiculairement à la direction d'assemblage (F) du cache (25) **et/ou que** le clip de fixation (49) est disposé sur le côté du pavillon (11) opposé à l'habitacle du véhicule.

3. Véhicule selon la revendication 1 ou 2, **caractérisé en ce que** le contour de guidage (51) est au moins un guidage linéaire, sur lequel le clip de fixation (49) peut être poussé dans un mouvement d'enfichage linéaire (S) **et qu**'en particulier le cache (25) présente une ouverture de cache (39), qui est formée dans la section de base du cache (35) et/ou est formée essentiellement dans la direction d'assemblage (F) en alignement avec l'œillet de suspension (21) côté support **et qu**'en particulier un contour de guidage (51) est formé respectivement de chacun des deux côtés de l'ouverture de cache (39).

4. Véhicule selon la revendication 3, **caractérisé en ce que** le clip de fixation (49) est une agrafe de fixation en forme de U, qui présente deux bras d'agrafe (53) parallèles l'un à l'autre, lesquels sont reliés l'un à l'autre au moyen d'une barre de liaison (55).

5. Véhicule selon la revendication 4, **caractérisé en ce que** le guidage linéaire formé sur le corps de montage du cache (47) est au moins une rainure de guidage ouverte latéralement vers l'extérieur, dont le fond de rainure (59) et la première face latérale de rainure (61) sont des composants de même matériau d'une nervure de guidage (63) formée sur le corps de montage du cache (47) **et/ou que** la deuxième face latérale de rainure est formée par la face arrière du cache (25).

6. Véhicule selon la revendication 5, **caractérisé en ce que** la barre de liaison (55) de l'agrafe de fixation en forme de U agit comme une butée de mouvement, laquelle est, dans la position de verrouillage (V), en appui sur un contour de butée côté cache, en particulier sur une face frontale de la rainure de guidage faisant face à la barre de liaison (55).

7. Véhicule selon l'une quelconque des revendications précédentes, **caractérisé en ce que** le corps de montage du cache (57) ou le clip de fixation (49) présente au moins un élément d'encliquetage (43) élastiquement souple, lequel est, à l'état assemblé, en liaison d'encliquetage avec la pièce porteuse (19) côté carrosserie et ce en formant un second emplacement de raccordement (A2) au niveau duquel le cache (25) est attaché à la pièce porteuse (19) côté carrosserie.

8. Véhicule selon la revendication 7, **caractérisé en ce que** l'élément d'encliquetage (43) est formé avec son pied d'élément directement à l'extérieur sur la face latérale de rainure (61) de la barre de liaison (63) du cache (25) **et/ou que** l'élément d'encliquetage (43) fait saillie perpendiculairement de la face latérale de rainure (61) de la nervure de guidage (63).

9. Véhicule selon la revendication 7, **caractérisé en ce que** l'élément d'encliquetage (43) formé d'une pièce et/ou du même matériau sur le clip de fixation (49) est orienté, dans la position de verrouillage (V), perpendiculairement à la section de base plane du cache (35) **et/ou qu**'un élément d'encliquetage (43) est formé sur chaque bras d'agrafe (53) du clip de fixation (49) formé comme une agrafe de fixation **et/ou que,** dans la position de verrouillage (V) l'élément d'encliquetage (43) est disposé latéralement en dehors de la rainure de guidage (51).

10. Véhicule selon l'une quelconque des revendications 7 à 9, **caractérisé en ce que** la solidité de liaison du premier emplacement de raccordement (A1) est supérieure à la solidité de liaison du second emplacement de raccordement (A2), de telle sorte que, lors de l'application d'une force inverse à la direction d'assemblage (F) sur le cache (25), le second emplacement de raccordement (A2) se sépare en premier.

11. Véhicule selon l'une quelconque des revendications précédentes, **caractérisé en ce que,** concernant une compensation de tolérance, le cache (25) est installé de façon flottante dans l'ouverture de montage du pavillon (31) **et que**, pour la réalisation de l'installation flottante, le corps de montage du cache (47) présente sur la face arrière de la section de base plane du cache (35) un socle d'appui (65), lequel fait saillie avec jeu d'ouverture (Δl) à travers l'ouverture de montage du pavillon (31) **et que**, lors d'un mouvement de compensation de tolérance du cache (25), le socle d'appui (65) de celui-ci vient, en utilisant le jeu d'ouverture (Δl), en appui avec le bord d'ouverture de l'ouverture de montage du pavillon (31).
